# EUROPÄISCHE PATENTSCHRIFT

(11) **EP 1 277 894 B1**
(45) Veröffentlichungstag und Bekanntmachung des Hinweises auf die Patenterteilung: **14.11.2007**
(21) Anmeldenummer: 02016017.2
(22) Anmeldetag: 18.07.2002
(51) Int. Cl.: E04F 11/18, E06B 3/54

(54) **Eingespanntes Geländer**
Clamped handrail
Balustrade serrée

(30) Priorität: 18.07.2001 DE 20111872 U
(43) Veröffentlichungstag der Anmeldung: 22.01.2003
(73) Patentinhaber: Arnold AG, 61381 Friedrichsdorf (DE)
(72) Erfinder: Grimm, Michael, 61250 Usingen/Eschbach (DE); Arnold, Uwe, 61440 Oberursel (DE)
(74) Vertreter: Schubert, Siegmar

(56) Entgegenhaltungen:
- EP-A- 1 160 411
- US-A- 4 054 268
- US-A- 4 690 383
- US-A1- 2001 025 953

## Beschreibung

Die Erfindung betrifft ein eingespanntes Geländer mit einer scheibenförmigen Füllung, insbesondere aus Glas, die insbesondere einen Handlauf trägt.

Aus der Praxis bekannte Geländer weisen überwiegend Pfosten auf, welche den Handlauf tragen. Der Zwischenraum zwischen dem Handlauf und den Pfosten bzw. dem Boden kann dabei mehr oder weniger durch scheibenförmige Füllungen ausgefüllt sein, die auch an den Pfosten angebracht sind. - Diese Geländer erfordern wegen ihrer Pfosten einen verhältnismäßig hohen Materialund Montageaufwand.

Es sind daher aus der Praxis auch schon Glasgeländer ohne Pfosten der eingangs genannten Gattung bekannt, bei denen Glasscheiben im Bodenbereich eingespannt sind. Zur Einspannung wird die Glasscheibe jeweils mit einer ortsfesten vorgeschobenen Platte verschraubt. Die Verbindungsstellen bzw. die Schrauben sind dabei - auch zum Lösen der Glasscheiben - in störender Weise exponiert. Die Glasscheiben können selbst als Geländer dienen oder einen Handlauf tragen.

Bei einem eingespannten Geländer der eingangs genannten Gattung mit Glasscheiben, die einen Handlauf tragen, können diese in einer Profilanordnung auf oder in dem Boden oder seitlich Treppenstufen befestigt sein (US 3 358 969). Im einzelnen kann in einem im wesentlichen U-förmig umgrenzten rinnenförmigen Hohlraum in dem Boden ein Aufnahmeprofil eingesetzt sein, in das ein Stegelement mit U-förmigem Kanal fest eingesetzt ist. Die Glasscheibe ist in den U-förmigen Kanal eingeklebt und das Stegelement ist mit dem Aufnahmeprofil verschraubt. - Bei einer Variante ist das Aufnahmeprofil auf den Boden aufgeschraubt. - In beiden Fällen handelt es sich um eine komplizierte, zusammengesetzte Profilanordnung, aus der die Glasscheibe nicht ohne weiteres vollständig lösbar ist und in der sie nicht genau eingestellt, d.h. ausgerichtet werden kann. Damit die Glasscheibe ausgerichtet ist, muß sie exakt in dem U-förmigen Kanal anliegen und die Abmessungen der genannten Elemente der Profilanordnung müssen aufeinander abgestimmt sein. Die Profilanordnung kann als zusammengesetzter Tragkörper angesehen werden.

Bekannt sind ferner Sockelprofile mit einer annähernd V-förmigen Rinne, in der Brüstungsplatten mit Hilfe von Ausrichtkeilen provisorisch aufgestellt werden können und mit Ortbeton befestigt werde können (DE 26 05 771 A1). Statt der Brüstungsplatten können Stegelemente in die Rinne kurzer Sockelprofile zur Aufnahme von Ausfachungselementen beliebiger Art zwischen den Brüstungsplatten eingesetzt werden. Die Stegelemente enthalten eine obere Nut zur Aufnahme der Ausfachung. Die Stegelemente werden ebenfalls mit Ortbeton in der Rinne vergossen. Das Ausfachelement kann mit einem Abdeckprofil aus beliebigem Material versehen sein. - Auch hier lassen sich die Ausfachungselemente insbesondere aus Glas nicht in den Sockelprofilen einstellen, sondern allenfalls die Brüstungselemente. Weder die Ausfachungselemente noch die Brüstungselemente lassen sich beispielsweise zum Austausch oder zur Reparatur leicht lösen.

Es ist daher Aufgabe der vorliegenden Erfindung, die Einspannung der scheibenförmigen Füllung bzw. des Geländers im Bodenbereich zu verbessern, so daß sie technisch unkompliziert ist und nicht störend exponiert ist, daß die scheibenförmige Füllung einfach exakt ausgerichtet werden kann und daß sie im Bedarfsfall ohne weiteres ausgetauscht werden kann.

Diese Aufgabe wird durch das eingespannte Geländer mit den in Anspruch 1 angegebenen Merkmalen gelöst.

Dadurch, daß die scheibenförmige Füllung zwischen dem Paar keilförmiger Körper an dem einen der beiden Stege einerseits und dem anderen der beiden Stege andererseits eingepreßt gehalten wird, kann die Klemmkraft, mit der die scheibenförmige Füllung gehalten wird, bzw. der Anpreßdruck, den die Stege auf diese ausüben, durch Verschiebung der beiden keilförmigen Körper gegeneinander eingestellt werden. Je nach Verschiebeposition der beiden keilförmigen Körper ist deren Gesamtdicke unterschiedlich.

Die Klemmkraft bzw. Verschiebeposition kann gemäß Anspruch 2 mit wenigstens einer Einstellschraube definiert werden, mit der einer der keilförmigen Körper gegen den anderen eingestellt wird. Mit der Einstellschraube ist auch eine Prüfung möglich, ob die scheibenförmige Füllung in der gewünschten Weise fest eingespannt ist. Die Prüfung der Einspannung bzw. deren Einstellung kann durch Erfassung des Drehmoments erfolgen, welches an dem Schraubenkopf angreift.

Vorteilhaft für die leichte Zugänglichkeit der Stellschraube ist deren Anordnung nach Anspruch 3 bzw. konstruktiv besonders zweckmäßig nach Anspruch 4.

Zur definierten Einstellung der Klemmkraft genügt ein Paar keilförmiger Körper mit aneinanderliegenden einstellbaren Schrägen auf einer Seite der scheibenförmigen Füllung, während an der anderen Seite der scheibenförmigen Füllung ein einfaches Stützprofil bzw. eine Reihe solcher Stützprofile als Widerlager dienen können. Diese Kombination nach Anspruch 5 ist somit wenig aufwendig.

Weiterhin kann die scheibenförmige Füllung gemäß Anspruch 6 in dem Hohlraum des Tragkörpers auf wenigstens einem elastischen Auflagestreifen, der nicht in Richtung einer Längsachse durchgängig zu sein braucht, aufliegen. Dadurch wird das Gewicht der scheibenförmigen Füllung und des an ihm befestigten Geländers gleichmäßig auf den Tragkörper verteilt und Beschädigungen der Kanten der scheibenförmigen Füllung sind bei der Montage weitgehend ausgeschlossen.

In einer Weiterbildung des eingespannten Geländers wird nach Anspruch 7 die scheibenförmige Füllung zwischen dem elastischen Auflagestreifen auch an Innenseiten des ersten flachen Stegs und des zweiten flachen Stegs elastisch eingepreßt gehalten. - Zwischen Abschnitten des Auflagestreifens wird die scheibenförmige Füllung, insbesondere aus Glas, zwar eingeklemmt, aber nicht beschädigt. Der Vorteil der Einklemmung mit dem Paar keilförmiger Körper wird nicht beeinträchtigt, wonach die scheibenförmige Füllung auch im zerbrochenen Zustand nach oben aus dem Auflagestreifen herausgezogen werden kann, ohne vorheriges Lösen von Vergußmasse aus dem Tragkörper bzw. zwischen dessen flachen Stegen zu erfordern. Der Tragkörper mit dem Paar keilförmiger Körper nach Anspruch 9, auch die Stützprofile brauchen sich nicht durchgehend in Längsrichtung des Geländers bzw. der scheibenförmigen Füllung zu erstrekken, es genügen vielmehr materialsparend kürzere Abschnitte, die lückenbildend angeordnet sind.

Der elastische Auflagestreifen, sonst auch die elastischen Stützprofile, können aus einem elastischen Material bestehen, welches gemäß Anspruch 8 auf der Gruppe EPDM, Gummi, weichmacherloser Kunststoff ausgewählt ist, um die scheibenförmige Füllung vor stellenweise Beschädigungen schützen.

Besonders bevorzugt ist die scheibenförmige Füllung gemäß Anspruch 10 als mehrschichtiges Glas mit eingeschlossener Folie, welches unter der Bezeichnung VSG bekannt ist. Ein solches mehrschichtiges Glas hat den Vorteil, daß bei dem Einklemmen der scheibenförmigen Füllung in deren unteren Randbereich sich eine zwischen den beiden Glasschichten gelagerte Folie elastisch verformen kann und so eine feste Einspannung ohne punktuelle Überlastung bei entsprechend hoher Klemmkraft erlaubt.

Der Tragkörper kann alternativ als Flurkonstruktion oder als Brüstungskonstruktion realisiert sein. Im erstgenannten Fall ist der Tragkörper mit dem U-förmig umgrenzten Hohlraum als Bodenschiene mit einer Fußplatte und auf dieser im lichten Abstand zueinander parallele, hochkant stehenden flachen Stegen gemäß Anspruch 11 ausgebildet, die mit der Fußplatte verschweißt sind. Die Fußplatte wird im Abstand zu einer oberen Bodenoberfläche auf einer tieferen Bauwerksschicht befestigt, so daß die Bodenschiene durch die Bodenoberfläche praktisch vollständig verdeckt und geschützt ist. In diesem Zustand der Bodenschiene kann gleichwohl die scheibenförmige Füllung in den Tragkörper von oben eingesetzt werden und im unteren Randbereich vergossen werden. Desgleichen ist die scheibenförmige Füllung im Falle eines gewünschten Austauschs zum Lösen der scheibenförmigen Füllung von oben erreichbar.

Die mechanische Stabilität und Festigkeit der Bodenschiene, welche die Kräfte und Momente der scheibenförmigen Füllung und des an dieser befestigten Geländers aufnimmt, kann noch dadurch verbessert werden, daß die Stege der Bodenschiene mit deren Fußplatte zusätzlich außen seitlich mit quer angeschweißten Stützwinkeln versteift werden.

Für eine Brüstungskonstruktion ist der Tragkörper als Bodenschiene gemäß Anspruch 12 ausgebildet, die eine Fußplatte, einen ersten flachen Steg, der seitlich rechtwinklig zu der Fußplatte mit dieser verschweißt ist, einen zweiten flachen Steg, der zu dem ersten Steg im Abstand parallel angeordnet ist und der an einem unteren Abschnitt mit einem unteren Abschnitt des ersten Stegs über ein Distanzstück fest verbunden ist, insbesondere verschweißt ist. Auch in diesem Fall kann die Bodenschiene unterhalb der Bodenoberfläche geschützt eingebaut werden. Dabei kann der eine der beiden flachen Stege eine Brüstung seitlich glatt abschließen und zusätzlich eine Blechverkleidung tragen.

Alternativ kann der erste Steg an der Fußplatte mit quer angeschweißten Stützwinkeln zusätzlich versteift sein.

Die Erfindung wird im folgenden anhand einer Zeichnung mit vier Figuren erläutert. Es zeigen:
- Figur 1: einen Querschnitt durch eine erste Vorstufe der Erfindung in einer Flurkonstruktion,
- Figur 2: einen Querschnitt durch eine zweite Vorstufe der Erfindung in einer Brüstungskonstruktion,
- Figur 3: einen Querschnitt durch ein erfindungsgemäß eingespanntes Geländer in dessen unterem Bereich und
- Figur 4: einen Querschnitt durch einen Ausschnitt einer Variante des erfindungsgemäß eingespannten Geländers, ebenfalls dessen unteren Bereich.

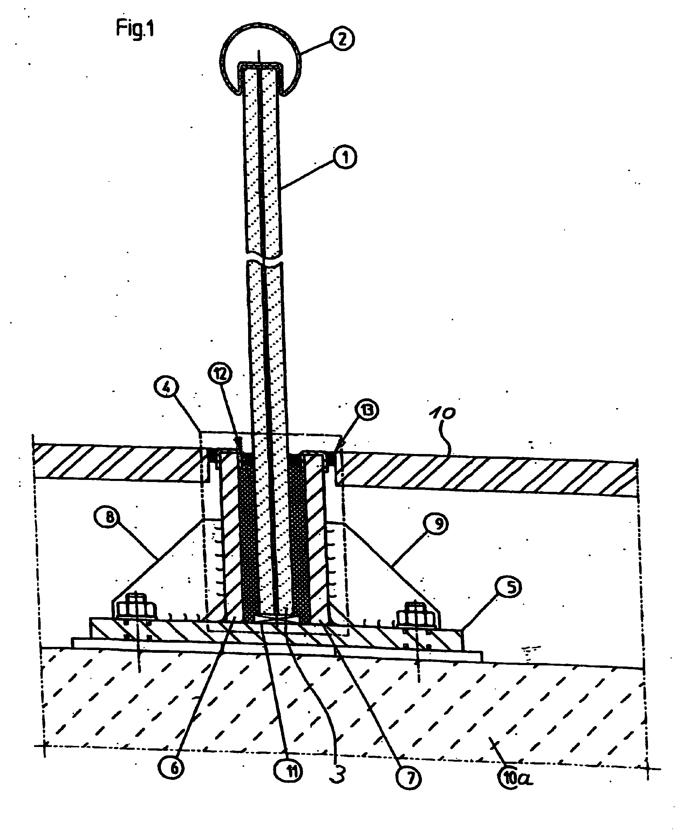

In der Zeichnung ist mit 1 eine scheibenförmige Füllung eines eingespannten Geländers bezeichnet, die aus einem mehrschichtigen Glas, bekannt unter der Bezeichnung VSG, besteht. Sie trägt oben einen Handlauf 2 und ragt mit einem unteren Randabschnitt 3 in einen Tragkörper, der als Bodenschiene 4 ausgebildet ist. Letztere besteht aus einer Fußplatte 5, auf der im lichten Abstand zueinander parallel hochkant stehende flache Stege 6 und 7, einen Hohlraum U-förmig begrenzend, aufgeschweißt sind. Der Abstand zwischen den Stegen 6 und 7 ist so groß, daß sie bei eingeschobener scheibenförmiger Füllung 1 Zwischenräume zwischen Innenseiten der Stege und der etwa mittig angeordneten scheibenförmigen Füllung bilden. Die Stege 6, 7 sind auf der Fußplatte 5 durch Stützwinkel 8, 9, von denen mehrere in der Tiefe der Figur 1 angeordnet sein können und die mit den Außenseiten der Stege und mit der Fußplatte 5 verschweißt sind, zusätzlich gehalten.

Die Fußplatte der kompletten Bodenschiene wird, wie in Figur 1 dargestellt, mit einem bodenseitigen Bauwerksteil 10a unterhalb einer Fläche 10 verschraubt. Die Bodenfläche 10 liegt dabei im wesentlichen auf der Höhe der nicht bezeichneten oberen Kanten der Stege 6 und 7, so daß ein glatter Übergang bis zu der scheibenförmigen Füllung 1 gebildet wird. Die flachen Stege 6, 7 weisen eine Höhe auf, die zur sicheren Einspannung der scheibenförmigen Füllung ausreicht, ohne die Füllung an der Einspannstelle, insbesondere bei auftretenden Querkräften und Momenten, zu überlasten.

Vor Einbringung der scheibenförmigen Füllung 1 in die Bodenschiene 4 wird in den Hohlraum des Tragkörpers bzw. der Bodenschiene 4 ein elastischer Auflagestreifen 11 eingelegt, auf dem sich die Füllung 1 unten beschädigungsfrei abstützen kann. Sodann wird der verbleibende Hohlraum in dem vorliegenden Fall mit Vergußmasse 12 ausgegossen, nach deren Erhärten die scheibenförmige Füllung in der Bodenschiene 4 gehalten wird. Anschließend können die Oberseite der Füllung und benachbarte Spalte zwischen Außenseiten der flachen Stege 6 und 7 und der Bodenfläche 10 durch eine Versiegelungsschicht 13 oben abgeschlossen werden.

Der Handlauf 2 kann bereits vor dem Einbringen der scheibenförmigen Füllung 1 in die Bodenschiene 4 oben an der Füllung angebracht sein; es ist jedoch auch denkbar, den Handlauf erst nach Einspannen der Füllung, d.h. nach Erhärten der Vergußmasse 12, oben an der Füllung zu montieren.

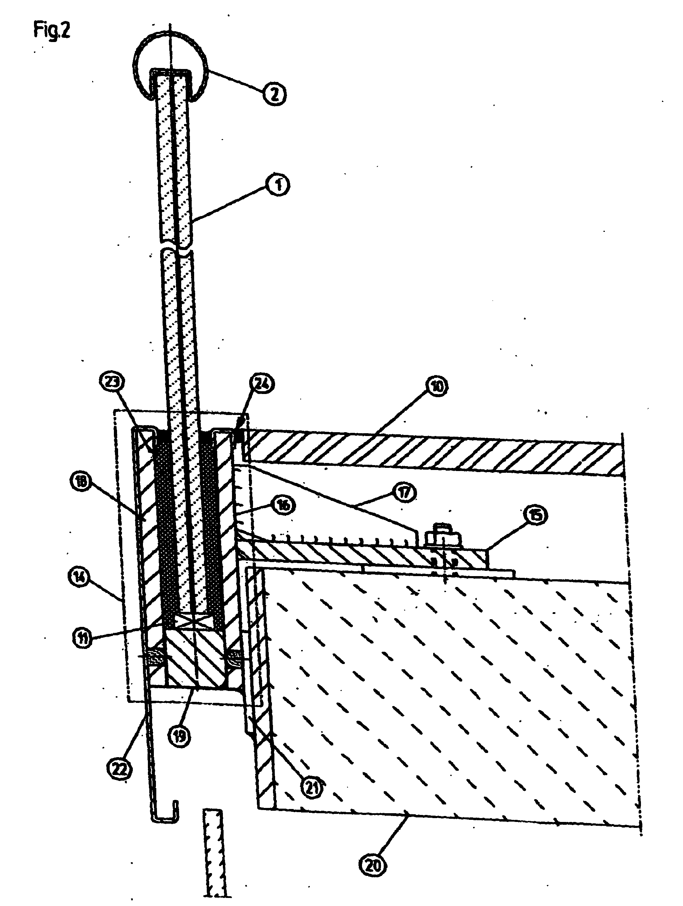

Bei der Ausführungsform als Brüstungskonstruktion weist der als Bodenschiene 14 ausgebildete Tragkörper eine Fußplatte 15 auf, die an einem ersten flachen Steg 16 seitlich angeschweißt ist. Diese Anordnung kann wiederum durch in der Tiefe der Figur 2 versetzte Stützwinkel 17 versteift sein. Zwischen dem ersten flachen Steg und einem im Abstand parallel zu diesem angeordneten zweiten flachen Steg 18 befindet sich ein Distanzstück 19, und zwar zwischen nicht bezeichneten unteren Abschnitten des ersten flachen Stegs und des zweiten flachen Stegs. Mit dem Distanzstück 19 sind die beiden Stege 16, 18 verschweißt. Somit umgrenzen die beiden Stege 16, 18 und das Distanzstück einen Hohlraum U-förmig.

Die Bodenschiene 14 wird, wie in Figur 2 dargestellt, im Bereich einer Brüstung oben auf einem Bauwerksteil 20 aufgeschraubt und durch eine Distanzplatte 21, die außen auf dem ersten Flansch 16 aufgeschweißt ist, zusätzlich an dem Bauwerksteil im gewünschten Abstand fixiert. Die Stege 16, 18 schließen dabei mit ihren oberen Kanten wieder an das Niveau der Fläche 10 an. Der zweite flache Steg 18 kann außen zusätzlich eine Blechverkleidung 22, hauptsächlich aus ästhetischen Gründen, tragen.

In den durch die Stege 16, 18 und das Distanzstück 19 umgrenzten Hohlraum wird entsprechend der Ausführungsform gemäß Figur 1 ein Auflagestreifen 11 eingelegt, auf den sich die scheibenförmige Füllung 1 abstützen kann. Die zunächst in der Position wie in Figur 2 dargestellt gehaltene scheibenförmige Füllung 1 wird in dem vorliegenden Fall in ihrem unteren Bereich mit Vergußmasse 23 vergossen. Anschließend kann wiederum eine glatte Oberfläche auf der Oberseite der Füllung sowie an einem Spalt zwischen dem Steg 16 und der Bodenfläche 10 durch eine Versiegelungsschicht 24 hergestellt werden. Der Handlauf 2 kann wie bei der Ausführungsform nach Figur 1 montiert werden.

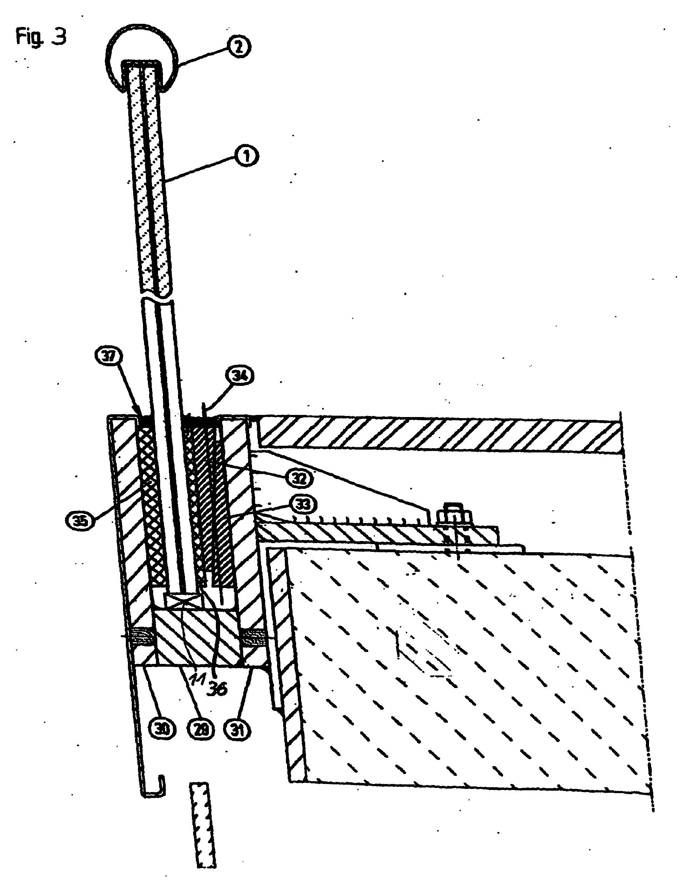

In der erfindungsgemäßen Ausführungsform nach Figur 3 befindet sich nur auf einer Seite des durch flache Stege 30, 31 und ein Distanzstück 29 U-förmig begrenzten Hohlraums ein Stützprofil 35. Auf der gegenüberliegenden Seite des Hohlraums ist zwischen der scheibenförmigen Füllung 1 und dem Steg 31 ein Paar keilförmiger Körper 32, 33 angeordnet, die mit nicht bezeichneten schrägen Flächen aneinanderliegen. Der gegenseitige Höhenabstand und damit die wirksame Dicke des Paars keilförmiger Körper kann durch eine Einstellschraube 34 eingestellt werden. Der keilförmige Körper 32 kann sich dabei über ein weiteres Stützprofil 36 gegen die scheibenförmige Füllung 1 abstützen.

Mit der Einstellschraube 34 ist eine drehmomentkontrollierte, feinfühlige Einstellung der Klemmkraft möglich, die auf die scheibenförmige Füllung ausgeübt wird, sowie eine mittelbare Kontrolle dieser Klemmkraft. Nach Einstellung der Klemmkraft kann der verbleibende Teil des Hohlraums zwischen den Stegen 30 und 31 mit einer Versiegelungsmasse 37 versiegelt werden, die so beschaffen ist, daß sie verhältnismäßig leicht aus dem Hohlraum entfernt werden kann, da sie keine Klemmkraft aufzubringen braucht.

Die Klemmkraft kann damit zuverlässig auf einem gewünschten Wert gehalten werden, wenn die scheibenförmige Füllung 1, wie dargestellt, ein mehrschichtiges Glas mit eingeschlossener Folie ist, die sich bei aufgebrachter Klemmkraft elastisch verformen kann.

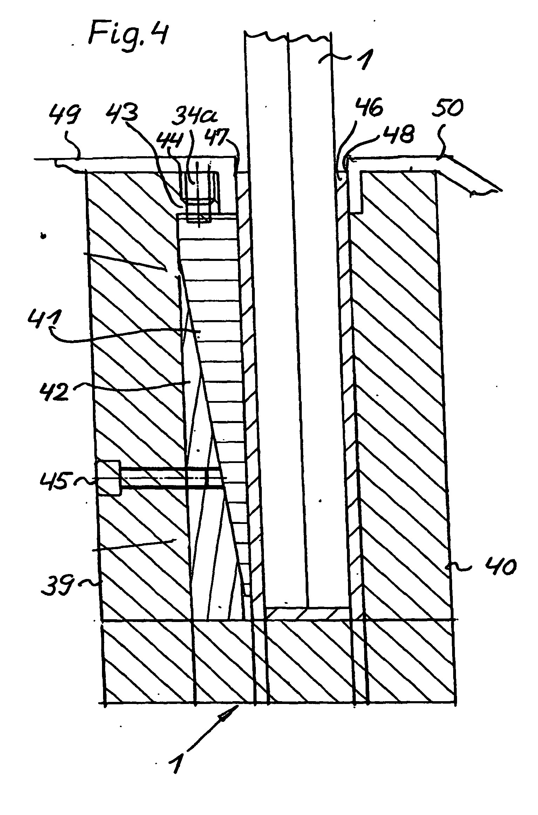

In der erfindungsgemäßen Ausführungsform nach Figur 4 ist ein Tragkörper 38 mit parallelen Stegen 39, 40 einstückig ausgebildet. Zum Einklemmen bzw. Einspannen der scheibenförmigen Füllung 1 dient wiederum das Paket keilförmiger, gegeneinander im wesentlichen vertikal verschiebbarer Körper 41, 42 neben dem Steg 39. Zur vertikalen Einstellung des ersten keilförmigen Körpers 41 ist eine Einstellschraube 34a vorgesehen, die durch eine Bohrung 44 bzw. ein Senkloch in einem oben nach innen überkragenden Abschnitt 43 hindurchreicht, der aus dem Steg 39 ausgeformt ist. Die Einstellschraube 34a ist somit gut von oben erreichbar, steht aber nicht über den Abschnitt 43 nach oben störend hervor. Der zweite keilförmige Körper 42 ist dagegen durch eine Schraube 45 festgelegt, die quer durch den Steg 39 hindurchreicht und nach Einbau des Tragkörpers 38 in ein Bauwerk nicht mehr erreicht zu werden braucht. Die scheibenförmige Füllung wird nach Einbau des Tragkörpers 38 in den zwischen den Stegen 39, 40 liegenden Hohlraum von oben eingeschoben, wobei ein unterer Abschnitt der Füllung von einem elastischen Auflagestreifen 46 bzw. dessen Abschnitten umfaßt wird, durch die Beschädigungen der Füllung vermieden werden. - Der Tragkörper 38 kann in Längsrichtung, d.h. senkrecht zur Zeichenebene, um ein Vielfaches kürzer als die Füllung sein, was ausreicht, um diese sicher einzuspannen.

Aus beiden Stegen 39, 40 sind oben Nuten 47, 48 ausgeformt, in die Verkleidungselemente 49, 50 mit abgewinkelten Endabschnitten hineinreichen. Das Verkleidungselement 49 kann zur gut zugänglichen Verstellung der Einstellschraube 34a entfernt werden, wenn es ohne Durchbruch über der Einstellschraube durchgehend ästhetisch ansprechend ausgeführt ist.

### Bezugszahlenliste

- 1: scheibenförmige Füllung
- 2: Handlauf
- 3: unterer Randabschnitt
- 4: Bodenschiene
- 5: Fußplatte
- 6: Steg
- 7: Steg
- 8: Stützwinkel
- 9: Bauwerksteil
- 10: Bodenfläche
- 11: Auflagestreifen
- 12: Vergußmasse
- 13: Versiegelungsschicht
- 14: Bodenschiene
- 15: Fußplatte
- 16: 1. flacher Steg
- 17: Stützwinkel
- 18: 2. flacher Steg
- 19: Distanzstück
- 20: Bauwerksteil
- 21: Distanzplatte
- 22: Blechverkleidung
- 23: Vergußmasse
- 24: Versiegelungsschicht
- 25: Stützprofil
- 26: Stützprofil
- 27: Steg
- 28: Steg
- 29: Distanzstück
- 30: Steg
- 31: Steg
- 32: keilförmiger Körper
- 33: keilförmiger Körper
- 34, 34a: Stellschraube
- 35: Stützprofil
- 36: Stützprofil
- 37: Versiegelungsmasse
- 38: Tragkörper
- 39: Steg
- 40: Steg
- 41: keilförmiger Körper
- 42: keilförmiger Körper
- 43: Abschnitt
- 44: Bohrung
- 45: Schraube
- 46: Auflagestreifen
- 47: Nut
- 48: Nut
- 49: Verkleidungselement
- 50: Verkleidungselement

## Patentansprüche

1. Eingespanntes Geländer mit einer scheibenförmigen Füllung (1) insbesondere aus Glas, die insbesondere einen Handlauf (2) trägt und mit einem unteren Randabschnitt in einem im wesentlichen U-förmigen Hohlraum eines Tragkörpers befestigt ist, wobei der Hohlraum seitlich von zwei im lichten Abstand zueinander parallelen, hochkant stehenden Stegen (30, 31; 39, 40) begrenzt ist,
**dadurch gekennzeichnet,**
**daß** zwischen der Innenseite wenigstens eines (31; 39) der beiden flachen Stege (30, 31; 39, 40) und der scheibenförmigen Füllung (1) ein Paar keilförmiger Körper (32, 33; 41, 42) mit aneinanderliegenden einstellbaren Schrägen angeordnet ist und daß die scheibenförmige Füllung (1) zwischen dem Paar keilförmiger Körper (32, 33; 41, 42) an dem einen (31; 39) der beiden Stege (30, 31; 39, 40) einerseits und dem anderen der beiden Stege (30; 40) andererseits eingepreßt gehalten wird.

2. Eingespanntes Geländer nach Anspruch 1,
**dadurch gekennzeichnet,**
**daß** die keilförmigen Körper (32, 33; 41, 42) eines Paars durch eine Stellschraube (34; 34a) gegeneinander verstellbar sind.

3. Eingespanntes Geländer nach Anspruch 2,
**dadurch gekennzeichnet,**
**daß** die Stellschraube (34a) von oben erreichbar ist und an einem der beiden keilförmigen Körper (39) oben angreift.

4. Eingespanntes Geländer nach Anspruch 2 oder 3,
**dadurch gekennzeichnet, daß** die Stellschraube (34a) durch einen oben nach innen überkragenden Abschnitt (43) des einen der beiden Stege (39) hindurchreicht.

5. Eingespanntes Geländer nach einem der Ansprüche 1 bis 4,
**dadurch gekennzeichnet,**
**daß** an einer Innenseite des anderen (30) der beiden Stege (30, 31) ein elastisches Stützprofil (35) angeordnet ist

6. Eingespanntes Geländer nach wenigstens einem der vorangehenden Ansprüche,
**dadurch gekennzeichnet,**
**daß** die scheibenförmige Füllung (1) in dem Hohlraum des Tragkörpers auf wenigstens einem elastischen Auflagestreifen (11; 46) aufliegt.

7. Eingespanntes Geländer nach wenigstens einem der vorangehenden Ansprüche,
**dadurch gekennzeichnet,**
**daß** die scheibenförmige Füllung (1) zwischen Abschnitten des Auflagestreifens (46) die U-förmig angeordnet sind, innerhalb der Stege (39, 40) eingepreßt gehalten wird.

8. Eingespanntes Geländer nach wenigstens einem der Ansprüche 5 bis 7,
**dadurch gekennzeichnet,**
**daß** der elastische Auflagestreifen (11, 46) und die elastischen Stützprofile (25, 26, 35) aus einem elastischen Material bestehen, welches aus der Gruppe EPDM, Gummi, weichmacherloser Kunststoff ausgewählt ist.

9. Eingespanntes Geländer nach wenigstens einem der vorangehenden Ansprüche,
**dadurch gekennzeichnet,**
**daß** der Tragkörper mit dem Paar keilförmiger Körper sich nur über einen Bruchteil der Länge der scheibenförmigen Füllung erstreckt.

10. Eingespanntes Geländer nach wenigstens einem der vorangehenden Ansprüche,
**dadurch gekennzeichnet,**
**daß** die scheibenförmige Füllung (1) ein mehrschichtiges Glas mit eingeschlossener Folie ist.

11. Eingespanntes Geländer nach wenigstens einem der vorangehenden Ansprüche,
**dadurch gekennzeichnet,**
**daß** der Tragkörper als Bodenschiene (4) mit einer Fußplatte (5) und den auf dieser aufgeschweißten, hochkant stehenden Stegen (6, 7) ausgebildet ist.

12. Eingespanntes Geländer nach wenigstens einem der Ansprüche 1 bis 11,
**dadurch gekennzeichnet,**
**daß** der Tragkörper als Bodenschiene (14) ausgebildet ist, die eine Fußplatte (15), einen ersten flachen Steg (16), der seitlich rechtwinklig zu der Fußplatte (15) mit dieser verschweißt ist, einen zweiten flachen Steg (18), der zu dem ersten Steg (16) im Abstand parallel angeordnet ist und an einem unteren Abschnitt mit einem unteren Abschnitt des ersten Stegs (16) über ein Distanzstück (19) fest verbunden ist, umfaßt.

13. Eingespanntes Geländer nach wenigstens einem der vorangehenden Ansprüche,
**dadurch gekennzeichnet,**
**daß** aus dem Tragkörper (38) oben innen Nuten (47, 48) ausgeformt sind, die Abschnitte abgewinkelter Verkleidungselemente (49, 50) aufnehmen.

## Claims

1. Clamped handrail comprising a disc-shaped filling (1), particularly of glass, which in particular bears a handrail (2) and is secured, with one lower edge section, within a substantially U-shaped hollow space of a carrying body, said hollow space laterally being restrained by two parallel upright bars (30, 31; 39, 40) disposed at clear distance relative to each other,
**characterized in**
**that** between the inner side of at least one (31, 39) of said two flat bars (30, 31; 39, 40) and said disc-shaped filling (1) a pair of wedge-shaped bodies (32, 33; 41, 42) having adjacent adjustable inclinations is disposed, and that said disc-shaped filling (1) is held squeezed between said pair of wedge-shaped bodies (32, 33; 41, 42) and the one (31; 39) of said two bars (30, 31; 39, 40), on one hand, and the other (30; 40) of said two bars, on the other hand.

2. Clamped handrail according to claim 1
**characterized in**
**that** said wedge-shaped bodies (32, 33; 41, 42) of one pair can be moved relative to each other by an adjusting screw (34, 34a).

3. Clamped handrail according to claim 2,
**characterized in**
**that** the adjusting screw (34a) is accessible from above and engages from above at one of said two wedge-shaped bodies (39).

4. Clamped handrail according to claim 2 or 3,
**characterized in**
**that** the adjusting screw (34) extends through a section (43), overhanging above towards the interior, of one of said two bars (39).

5. Clamped handrail according to one of claims 1 to 4,
**characterized in**
**that** at one inner side of the other (30) of said two bars (30, 31) an elastic support profile is disposed.

6. Clamped handrail according to at least one of the foregoing claims,
**characterized in**
**that** said disc-shaped filling (1) in said hollow space of said carrying body rests on at least one elastic bearing strip (11; 46).

7. Clamped handrail according to at least one of the foregoing claims,
**characterized in**
**that** said disc-shaped filling (1) is kept squeezed within said bars (39, 40) between sections of said bearing strip (46) which are disposed in U-shape.

8. Clamped handrail according to at least one of claims 5 to 7,
**characterized in**
**that** said elastic bearing strip (11, 46) and said elastic supporting profiles (25, 26, 35) consist of an elastic material selected from the group comprising EPDM, rubber, softener-free plastic material.

9. Clamped handrail according to at least one of the foregoing claims,
**characterized in**
**that** said carrying body including said pair of wedge-shaped bodies extends only over a fraction of the length said disc-shaped filling.

10. Clamped handrail according to at least one of the foregoing claims,
**characterized in**
**that** said disc-shaped filling (1) is a laminated glass having a closed-in foil.

11. Clamped handrail according to at least one of the foregoing claims,
**characterized in**
**that** said carrying body is formed as a ground rail (4) having a footplate (5) and the upright standing bars (6, 7) welded onto it.

12. Clamped handrail according to at least one of claims 1 to 11,
**characterized in**
**that** said carrying body is formed as a ground rail (14) comprising a footplate (15), a first flat bar (16) laterally welded at right angles to said footplate (15), a second flat bar (18) disposed in parallel relative to said first bar (16) and at a lower section is solidly connected via a spacer (19) to a lower section of said first bar (16).

13. Clamped handrail according to at least one of the foregoing claims,
**characterized in**
**that** from said carrying body (38), on top of the inner side, grooves (47, 48) are formed out which accommodate sections of angle-shaped covering elements (49, 50).

## Revendications

1. Balustrade encastrée avec un panneau (1) en forme de plaque, en particulier de verre, qui porte en particulier une main courante (2) et qui est fixée, par une section de bord inférieure, dans une cavité, sensiblement en forme de U, d'un support, la cavité étant limitée latéralement par deux nervures (30, 31 ; 39, 40) de chant, parallèles l'une à l'autre avec un certain écartement, **caractérisée en ce que**, entre le côté intérieur d'au moins l'une des deux nervures (30, 31 ; 39, 40) et le panneau (1) en forme de plaque, est disposée une paire de corps (32, 33 ; 41, 42) en forme de coin ayant des chanfreins ajustables et reposant l'un sur l'autre, et **en ce que** le panneau (1) en forme de plaque est maintenu comprimé entre, d'une part, la paire de corps (32, 33 ; 41, 42) en forme de coin sur l'une (31; 39) des deux nervures (30, 31 ; 39, 40) et, d'autre part, sur l'autre (30; 40) des deux nervures.

2. Balustrade encastrée selon la revendication 1, **caractérisée en ce que** les corps (32, 33 ; 41, 42) en forme de coin d'une même paire sont ajustables l'un par rapport à l'autre par une vis de réglage (34 ; 34a).

3. Balustrade encastrée selon la revendication 2, **caractérisée en ce que** la vis de réglage (34a) peut être atteinte par le haut et s'applique par au-dessus sur l'un des deux corps en forme de coin.

4. Balustrade encastrée selon la revendication 2 ou 3, **caractérisée en ce que** la vis de réglage (34a) traverse une section (43), faisant saillie en haut vers l'intérieur, de l'une des deux nervures (39).

5. Balustrade encastrée selon l'une des revendications 1 à 4, **caractérisée en ce qu'**un profilé d'appui (35) élastique est disposé sur le côté intérieur de ladite autre des deux nervures (30, 31).

6. Balustrade encastrée selon au moins l'une des revendications précédentes, **caractérisée en ce que** le panneau (1) en forme de plaque repose, dans la cavité du support, sur au moins une bande d'appui (11 ; 46).

7. Balustrade encastrée selon au moins l'une des revendications précédentes, **caractérisée en ce que** le panneau (1) en forme de plaque est maintenu comprimé, à l'intérieur des nervures (39, 40), entre des sections de la bande d'appui (11 ; 46) qui sont disposées en forme de U.

8. Balustrade encastrée selon au moins l'une des revendications 5 à 7, **caractérisée en ce que** la bande d'appui (11, 46) élastique et les profilés d'appui (25, 26, 35) élastiques sont réalisés dans un matériau élastique qui est sélectionné dans le groupe constitué de l'EPDM, du caoutchouc, et d'une matière plastique sans plastifiant.

9. Balustrade encastrée selon au moins l'une des revendications précédentes, **caractérisée en ce que** le support et la paire de corps en forme de coin s'étend uniquement sur une fraction de la longueur du panneau en forme de plaque.

10. Balustrade encastrée selon au moins l'une des revendications précédentes, **caractérisée en ce que** le panneau (1) en forme de plaque est un verre multicouche avec inclusion de feuille.

11. Balustrade encastrée selon au moins l'une des revendications précédentes, **caractérisée en ce que** le support est réalisé en tant que rail au sol (4) avec une plaque de base (5) et les nervures (6, 7) de chant soudées sur celle-ci.

12. Balustrade encastrée selon au moins l'une des revendications 1 à 11, **caractérisée en ce que** le support est réalisé en tant que rail au sol (14) comprenant une plaque de base (15), une première nervure (16) plate soudée latéralement avec la plaque de base (15) et perpendiculairement à celle-ci, et une deuxième nervure (18) plate disposée parallèlement et à distance de la première nervure (16) et assemblée au niveau d'une section inférieure de manière fixe avec une section inférieure de la première nervure (16) par l'intermédiaire d'une pièce intercalaire (19).

13. Balustrade encastrée selon au moins l'une des revendications précédentes, **caractérisée en ce que** des rainures (47, 48) sont moulées, en haut et à l'intérieur, dans le support (38) pour loger des sections d'éléments de revêtement (49, 50) coudés.
